# EUROPEAN PATENT APPLICATION

(11) **EP 0 892 452 A2**
(43) Date of publication of application: **20.01.1999**
(21) Application number: 98111341.8
(22) Date of filing: 19.06.1998
(51) Int. Cl.: H01M 10/40

(54) **Non-aqueous secondary electrochemical cell**

(30) Priority: 20.06.1997 JP 164722/97; 20.06.1997 JP 164729/97
(71) Applicant: SONY CORPORATION, Tokyo (JP)
(72) Inventor: Akashi, Hiroyuki, Shinagawa-ku, Tokyo (JP); Senoo, Tadashi, Shinagawa-ku, Tokyo (JP); Shibuya, Mashio, Shinagawa-ku, Tokyo (JP); Noda, Kazuhiro, Shinagawa-ku, Tokyo (JP); SHINICHIRO, Yamada, Shinagawa-ku, Tokyo (JP); TOSHIKAZU, Yasuda, Shinagawa-ku, Tokyo (JP); KOJI, Sekai, Shinagawa-ku, Tokyo (JP)
(74) Representative: Müller, Frithjof E., Dipl.-Ing.

(57) **Abstract**

A lithium cell, having positive and negative electrodes capable of occluding and releasing lithium and a non-aqueous electrolyte. The cell of the present invention includes a positive electrode, a negative electrode and a gelated electrolyte composed of a polyacrylonitrile containing high molecular material, a γ-caprolactone containing non-aqueous solvent and an electrolyte salt mainly comprised of LiPF₆, with the content of γ-caprolactone in the gelated electrolyte being 30 mol% or less. With the gelated electrolyte composed of the polyacrylonitrile containing high molecular material, non-aqueous solvent and the electrolyte salt mainly composed of LiPF₆, a carbide film is formed on the electrode surface, on contact with the flame, as a result of the carbonization of the high molecular material and the carbonization accelerating operation of LiPF₆. This carbide film inhibits inflammation for realizing superior combustion retardant properties.

## Description

### BACKGROUND OF THE INVENTION

### Field of the invention

This invention relates to a cell having a gelated electrolyte.

### Related Art

A lithium cell, having positive and negative electrodes capable of occluding and releasing lithium, and a non-aqueous liquid electrolyte, recently is attracting notice since it has a energy density higher than with the secondary cell of an aqueous solution type, such as lead cell or a nickel-cadmium cell, and further has low self-discharging ratio.

For further improving the performance of the lithium secondary cell, the characteristics of the liquid electrolyte responsible for ion conduction across both electrodes play an important role, granting that selection of electrode material is also crucial. Therefore, the liquid electrolyte is required to have ion conductivity as high as possible and electrochemical stability capable of withstanding high electrical voltage. In light of the above, a wide variety of non-aqueous electrolytes have been proposed.

For example, organic high-molecular compounds of the cyclic or chain ester system are preferentially used as non-aqueous solvents of the liquid electrolyte. Examples of these compounds include propylene carbonate (PC), ethylene carbonate (EC), methyl ethyl carbonate (MEC), dimethyl carbonate (DMC), γ-butyrolactone (GBL), 1, 2-dimethoxy ethane (DME), methyl propionate and butyl propionate.

Among known electrolyte salts, there are KiPF₆, LiClO₄, LiBF₄, LiCF₃SO₃, LiAsF₆, LiN(CF₃SO₂)₂ and LiC(CF₂SO₂)₃. These electrolyte salts exhibit ion conductivity as high as several mS/cm in a moderate concentration area.

However, since the above-cited non-aqueous liquid electrolytes, constituted by the non-aqueous solvents and the electrolyte salts, are relatively low in the inflammation point, there is a risk of inflammation if the cell is dropped into fire by mistake, with the non-aqueous solvent leaking from within the cell then being turned into a gas to lead to inflammation.

Thus, in the Japanese laying-Open Publication Japanese laying-open Publication JP-A-4-184870, there is proposed a technique of adding a combustion retarder, such as phosphoric acid ester, into the non-aqueous liquid electrolyte for preventing such inflammation. This combustion retarder is known as a combustion retarder for high-molecular materials, with its effect being proportionate to the amount of addition.

Among other combustion retarders, there are also known halogenated compounds.

It should be noted that the phosphoric ester based compounds or halogen-based compounds are not necessarily electro-chemically stable, so that, in a high voltage range exceeding 3 V, they are prone to chemical transmutation or decomposition, as a result of which there is a fear of deterioration of the cell performance. If the amount of addition of the combustion retarder is increased for achieving a particularly high combustion retardant effect, the cell performance is likely to deteriorate significantly.

### SUMMARY OF THE INVENTION

It is an object of the present invention to provide a cell having high energy density and high ion conductivity and superior in safety.

The cell of the present invention is comprised of a positive electrolyte, a negative electrode and a gelated electrolyte.

The gelated electrolyte is composed of a high molecular material containing polyacrylonitrile and having a solubility parameter of 8 to 15 (cal/cm²)^{½}, a mixed solvent and an electrolyte salt mainly composed of LiPF₆.

The non-aqueous solvent is (1) a mixed solvent composed of a mixture of ethylene carbonate, propylene carbonate and a third non-aqueous solvent, (2) a mixed solvent composed of a mixture of ethylene carbonate, γ-butyrolactone and a third non-aqueous solvent, or (3) a mixed solvent composed of a mixture of ethylene carbonate, propylene carbonate, γ-butyrolactone and a fourth non-aqueous solvent. It is noted that the third non-aqueous solvent or the fourth non-aqueous solvent mean at least one of dimethyl carbonate, ethyl methyl carbonate, methyl propionate and ethyl propionate.

With a cell employing this gelated electrolyte, the cell performance which is optimum not only at ambient temperature or environment but also at lower temperatures may be realized because the gelated electrolyte exhibits ion conductivity not lower than 1 ms/cm at a temperature of 25°C and not lower than 0.4 ms/cm at a temperature of -20°C and at ambient temperature or environment, respectively.

Stated differently, the cell of the present invention includes a positive electrode, a negative electrode and a gelated electrolyte composed of a polyacrylonitrile containing high molecular material, a γ-butyrolactone containing non-aqueous solvent and an electrolyte salt mainly comprised of LiPF₆, with the content of γ-butyrolactone in the gelated electrolyte being 30 mol% or less. The molar fraction herein refers to a value when the sum of the number of the recurrent units of the high molecular material and the number of mols of the non-aqueous solvent and the electrolyte salt is set to 100 ml%.

With the gelated electrolyte composed of the polyacrylonitrile containing high molecular material, non-aqueous solvent and the electrolyte salt mainly composed of LiPF₆, a carbide film is formed on the electrode surface, on contact with the flame, as a result of the carbonization of the high molecular material and the carbonization accelerating operation of LiPF₆. This carbide film inhibits inflammation for realizing superior combustion retardant properties.

With the present gelated electrolyte, in which the non-aqueous solvent contains not more than 30 mol% of γ-butyrolactone, high ion conductivity and high chemical stability can be achieved. Therefore, transmutation reactions can be inhibited even if the gelated electrolyte is contacted with an highly reactive electrode material, such as metal lithium.

Since the above gelated electrolytes are superior in combustion retardant properties, there is only little risk of inflammation even on accidental descent of the cell into fire. Also, since the gelated electrolyte itself has superior combustion retardant properties, there is no necessity of using general-purpose combustion retardants inferior in electrochemical properties to render it possible to prevent deterioration of the cell performance by the combustion retardants.

Moreover, since the non-aqueous liquid electrolyte is fixed in the gelated electrolyte, there is no risk of leakage of the non-aqueous liquid electrolyte on load application on the cell, thus assuring high operational safety.

As for the electrode structure, since the gelated electrolyte is interposed between the positive and negative electrodes and is bonded to the surfaces of both electrodes, the electrode interval can be kept perpetually constant. This eliminates the necessity of pressurizing means required in the conventional flat-shaped cell employing the liquid non-aqueous electrolyte for maintaining the electrode interval, thus simplifying the cell structure.

With the cell of the present invention, employing a gelated electrolyte composed of a polyacrylonitrile containing high molecular material, a non-aqueous solvent having a pre-set composition and an electrolyte salt mainly comprised of LiPF⁶, combustion retardant properties can be accorded to the cell without detracting from the cell performance. In particular, if the present invention is applied to a non-aqueous cell employing alkali metal ions as reaction species, the cell can be significantly improved in operational safety.

### BRIEF DESCRIPTION OF THE DRAWINGS

Fig.1 is a schematic view showing the structure of a device used for measurement for a test on combustion retardant properties.
Fig.2 is a schematic view showing positive and negative electrodes plates and illustrating the method for fabricating the cell step-by-step.
Fig.3 is a schematic view showing a partitioning film.
Fig.4 is a schematic view showing the process of coating a gelated electrolyte on a partitioning film.
Fig.5 is a schematic view showing the process for accommodating the positive and negative electrodes plates and the partitioning film in a cell exterior member.
Fig.6 is a schematic view showing a heat fusion process of the cell exterior member.
Fig.7 is a graph showing discharging characteristics of a primary cell employing the gelated electrolyte.
Fig.8 is a graph showing discharging characteristics of a secondary cell employing the gelated electrolyte.
Fig.9 is a graph showing time changes of the resistance to charge movement.
Fig.10 is a graph showing discharging characteristics of another primary cell employing a gelated electrolyte.
Fig.11 is a graph showing discharging characteristics of another secondary cell employing a gelated electrolyte.

### DESCRIPTION OF PREFERRED EMBODIMENTS

The present invention is hereinafter explained with reference to its preferred embodiments.

The cell of the present invention is made up of a positive electrode, a negative electrode and a gelated electrolyte.

The gelated electrolyte is composed of a high molecular material, a non-aqueous solvent and an electrolyte salt. Of these, the high molecular material is such a high molecular material containing polyacrylonitrile.

The high molecular material is a polymer containing acrylonitrile in its recurrent unit. The structure of this recurrent unit may be composed only of acrylonitrile or a copolymer with other monomers. Other monomers for copolymerisation include acrylic acid, methacrylic acid, vinyl acetate, itaconic acid, hydrogenated methyl acrylate, hydrogenated ethyl acrylate, acrylic amide, vinyl chloride, vinylidene chloride and vinylidene chloride. Illustrative examples of the copolymers include acrylonitrile butadiene rubber, acrylonitrile butadiene styrene resin, acrylonitrile polyethylene chloride propylene diene styrene resin, acrylonitrile vinyl chloride resin, acrylonitrile methacrylate resin and acrylonitrile acrylate resin, it being noted that these copolymers need to be capable of undergoing gelation.

The degree of gelation of the gelated electrolyte is intimately associated with the molecular weight of the molecular weight of the high molecular material, such that, for achieving optimum gelation degree, the number average molecular weight of the high molecular material is desirably of the order of 5000 to 500000.

For realizing combustion retardant effect and compatibility with other components, the solubility parameter of the high molecular material need to be in a range from 8 to 15 (cal/cm²)^{½}. This high molecular material is liable to form a carbide film on its surface on heating. This possibly contributes to the combustion retardant effect of the gelated electrolyte. This solubility parameter may be found by a method described in J. Branddrup and E.H. Immergut, POLYMER HANDBOOK, third edition, WILLEY INTERSCIENCE, 1989 (p.IV. 340 to 341).

In view of the combustion retardant effect and compatibility, the amount of this high molecular material in the gelated electrolyte is desirably 5 to 30 mol% in terms of the number of the recurrent units. Further, in view of ease in handling after gel molding, it is desirably 5 to 15 mol%. The above ratio, that is the molar fraction, herein refers to a value when the sum of the number of the recurrent units of the high molecular material and the number of mols of the non-aqueous solvent and the electrolyte salt is set to 100 mol%.

The non-aqueous solvents may be enumerated by (1) a mixed solvent of ethylene carbonate, propylene carbonate and a third non-aqueous solvent, (2) a mixed solvent of ethylene carbonate, γ-butyrolactone and a third non-aqueous solvent, and (3) a mixed solvent of ethylene carbonate, propylene carbonate, γ-butyrolactone and a fourth non-aqueous solvent. Meanwhile, the third and fourth non-aqueous solvents are at least among dimethyl carbonate, ethyl methyl carbonate, methyl propionate and ethyl propionate

These non-aqueous solvents, having potential windows from -0.3 to 5.0 V with respect to the lithium potential, are compatible with the above-mentioned high molecular materials including polyacrylonitrile

Alternatively, such non-aqueous solvents containing γ-butyrolactone may be used. For example, the solvents which are solid at ambient temperature, such as ethylene carbonate, are used in combination with low-melting solvents. As such low-melting solvents, γ-butyrolactone is most preferred. By using γ-butyrolactone, temperature characteristics of the gelated electrolyte are improved thus realizing high ion conductivity. Also, if γ-butyrolactone is used, a gelated electrolyte higher in chemical stability than is possible with the use of other low-melting solvents may be produced, while it is also possible to prevent transmutation reaction of the gel due to contact with the electrode material. However, if the γ-butyrolactone is used in an excessive amount, the gelated electrolyte is lowered in chemical stability such that there is a risk of increased resistance of the gelated electrolyte to charge movement as a result of transmutation. Therefore, the amount of γ-butyrolactone is desirably suppressed to not more than 30 mol%.

This γ-butyrolactone is desirably used as a mixture with a solvent having high dielectric constant. Such high dielectric constant solvent may be enumerated by ethylene carbonate or propylene carbonate. In particular, ethylene carbonate is preferred since it is high in stability and meritorious in suppressing transmutation of the gelated electrolyte. Among illustrative combinations is a mixture of γ-butyrolactone and ethylene carbonate and a mixture of γ-butyrolactone, ethylene carbonate and polycarbonate.

As the electrolyte salt, LiPF₆ is used here because it accelerates carbonation of the high molecular material on contact of the gel with a flame to impart combustion retardant properties to the gelated electrolyte. Meanwhile, LiPF₆ may be used alone or as a mixture with other electrolyte salts. As the electrolyte salts for mixing, LiN(CF₃SO₂)₂, LiC(CF₂SO₂)₃, LiBF₄, LiAsF₆, LiCF₃SO₃, LiClO₄ or NaClO₄ may be used. Of these, LiC(CF₂SO₂)₃ is desirable since it is next to LiPF₆ in according combustion retardant effect.

The amount of the electrolyte salt in the gelated electrolyse is desirably selected so that the concentration of lithium ions will be 3 to 9 mol%. If the lithium ion concentration is less than 3 mol%, sufficient ion conductivity is not obtained, such that polarization during electrode reaction tends to be increased. If the lithium ion conductivity exceeds 9 mol%, it is difficult to dissolve the high molecular material. If salt concentration dependency of the ion conductivity is also taken into account, the lithium ion concentration ranging from 4 to 9 mol% is desirable for assuring sufficient ion conductivity.

The above-described characteristics of the gelated electrolyte are influenced significantly with the type of the electrolyte salt or the non-aqueous salt. However, since this type is specified in view of the combustion retardant effect and the ion conductivity, high ion conductivity is achieved not only at elevated temperatures but also at lower temperatures of the order of -20°C.

In fabricating the gelated electrolyte, an electrolyte salt is dissolved in a non-aqueous solvent to prepare a non-aqueous liquid electrolyte which is then heated and added to with a high molecular material containing polyacrylonitrile. When the high molecular material is dissolved completely, the solution is immediately spread on a substrate and allowed to cool to prepare a gelated electrolyte.

Thus, the gelated electrolyte can be fabricated easily on dissolution followed by cooling without the necessity of performing any particular cross-linking operation.

The cell of the present invention is constituted by this gelated electrolyte and the positive and negative electrodes, with the particular configuration being suitably selected in conformity to the cell shape. In the case of a flat-plate-shaped cell, the first gelated electrolyte, separator and the second gelated electrolyte are sandwiched between the positive electrode and the negative electrode assembly is accommodated in an outer cell casing for completing the cell

With the cell employing the gelated electrolyte, optimum cell performance can be realized without regard to temperature environment because the gelated electrolyte exhibits high ion conductivity at a temperature of 25°C or even at a lower temperature of -20°C.

Also, since the gelated electrolyte is superior in combustion retardant properties, there is only little risk of inflammation even if the cell is dropped by mistake into fire. Moreover, since the gelated electrolyte itself is superior in combustion retardant properties, there is no necessity for general-purpose combustion retardant agents inferior in eletro-chemical stability to be contained therein. This prevents the cell performance from being deteriorated due to the use of the combustion retardant agents.

Since the non-aqueous liquid electrolyte is fixed in the gelated electrolyte, there is no risk of the liquid leakage of the non-aqueous liquid electrolyte even on load application on the cell to assure high safety.

As for the cell structure, since the gelated electrolyte is interposed between the positive and negative electrodes and affixed to the electrode surfaces, there is maintained a constant separation between the electrodes at all times. The necessity of using pressurizing means for stably maintaining the relative position between both electrodes, as with conventional flat type cell employing liquid non-aqueous liquid electrolyte, is eliminated to simplify the cell structure.

Meanwhile, this cell may be of the primary cell configuration or the secondary cell configuration. If the cell is of the second cell configuration, the following materials of the positive and negative electrodes are used.

First, as the positive electrode material, a lithium transition metal compound oxide, having the general formula of LiₓMO₂, where M is at least one transition metal, preferably at least one of Mn, Co, Ni and Fe and 0.05 ≤ x ≤ 1.10, is used.

As the negative electrode material, lithium metal, lithium alloys and materials capable of occluding and yielding lithium, for example, carbonaceous materials, silicon compounds or tin compounds, are used. Of these, the carbonaceous materials may be enumerated by pyrocarbon, cokes (pitch cokes, needle cokes or petroleum cokes), graphites, vitreous carbons, carbons having an organic high molecular material as a precursor, carbon fibers or activated charcoal. The carbons having an organic high molecular material as a precursor may, for example, be obtained by firing e.g., furane resins at a moderate temperature.

### EXAMPLES

The present invention will be hereinafter explained with reference to illustrative Examples.

### Example 1

A gelated electrolyte was prepared in the following manner:

First, ethylene carbonate (EC), propylene carbonate (PC) and dimethyl carbonate (DMC) were mixed at a ratio of EC:PC:DMC of 50 mol%: 30 mol%: 4 mol% and were further added to with 7 mol% of LiPF₆ to prepare a non-aqueous liquid electrolyte.

This non-aqueous liquid electrolyte was pored into a beaker and heated to 120°C under stirring in a dry atmosphere with a dew point not higher than -50°C. To this heated solvent were added powders of polyacrylonitrile (PAN; number average molecular weight of 150000 and solubility parameter of 12) so that the molar fraction of acrylonitrile will be equal to 9 mol%. The agitation under heating was continued for further 20 minutes for obtaining a transparent highly viscous solution. The heating was subsequently discontinued and the highly viscous solution was immediately spread on a flat Petri dish and poured into a glass test tube (12 mm inner diameter by 150 mm length) so as to be allowed to cool overnight to prepare a gelated electrolyte.

### Examples 2 to 8

Gelated electrolytes were prepared in the same way as in Example 1 except changing the non-aqueous solvent to polyacrylonitrile ratio as shown in Table 1 to fabricate the gelated electrolyte as in Example 1.

### Examples 9 to 16

Gelated electrolytes were prepared in the same way as in Example 1 except using a mixed solvent of ethylene carbonate, propylene carbonate and ethyl methyl carbonate (EMC) and changing the ratio thereof and the ratio of polyacrylonitrile as shown in Table 2.

### Examples 17 to 24

Gelated electrolytes were prepared in the same way as in Example 1 except using a mixed solvent of ethylene carbonate, γ-butyrolactone (GBL) and dimethyl carbonate and changing the ratio thereof and the ratio of polyacrylonitrile as shown in Table 3.

### Examples 25 to 32

Gelated electrolytes were prepared in the same way as in Example 1 except using a mixed solvent of ethylene carbonate, γ-butyrolactone (GBL) and ethyl methyl carbonate and changing the ratio thereof and the ratio of polyacrylonitrile as shown in Table 4.

### Examples 33 to 36

Gelated electrolytes were prepared in the same way as in Example 1 except using a mixed solvent of ethylene carbonate, propylene carbonate, γ-butyrolactone and dimethyl carbonate and changing the ratio thereof and the ratio of polyacrylonitrile as shown in Table 5.

### Comparative Examples 1 to 4

Gelated electrolytes were prepared in the same way as in Example 1 except using a mixed solvent of ethylene carbonate and propylene carbonate and changing the ratio thereof and the ratio of polyacrylonitrile as shown in Table 6.

### Comparative Examples 5 to 8

Gelated electrolytes were prepared in the same way as in Example 1 except using a mixed solvent of ethylene carbonate and γ-butyrolactone and changing the ratio thereof and the ratio of polyacrylonitrile as shown in Table 7.

### Comparative Examples 9 to 20

Gelated electrolytes were prepared in the same way as in Example 1 except using a mixed solvent of ethylene carbonate and propylene carbonate or a mixed solvent of ethylene carbonate, propylene carbonate and dimethyl carbonate, employing LiClO₄ as an electrolyte salt and changing the ratio thereof and the ratio of polyacrylonitrile as shown in Table 8.

### Comparative Examples 21 to 32

Gelated electrolytes were prepared in the same way as in Example 1 except using a mixed solvent of ethylene carbonate and γ-butyrolactone or a mixed solvent of ethylene carbonate, γ-butyrolactone and ethyl methyl carbonate and employing LiClO₄ as an electrolyte salt and changing the ratio thereof and the ratio of polyacrylonitrile as shown in Table 9.

Of the gelated electrolytes, prepared as described above, evaluation was made of ion conductivity, temperature dependency of the activation energy and combustion retardant properties. These properties were measured in the following manner:

### Measurement of Ion Conductivity and Temperature Dependency of Activation Energy

A gelated electrolyte in a flat Petri dish was sliced into columns each with a diameter of 1.0 cm. Each column was sandwiched between two disc-shaped electrodes of platinum (diameter: 1.0 cm) and measurement was made of ion conductivity by a complex impedance method using an impedance analyser (trade name: HP4192A). For measurement, the temperatures of 25°C and - 20°C were used. The measurement conditions are as follows:
applied voltage: 0.5V
scanning frequency range: 5 to 13 MHz

Also, from the ion conductivity β1 at a temperature of 25°C and the ion conductivity β2 at a temperature of -20°C, the values of the activation energy of the ion conduction reaction were found and the difference therebetween were taken in order to check the temperature dependency of the ion conduction reaction.
β = Aexp(-E/RT)
β = ion conductivity
A: frequency factor
E: activation energy
R: gas constant
T: temperature

### Test on combustion Retardant Properties

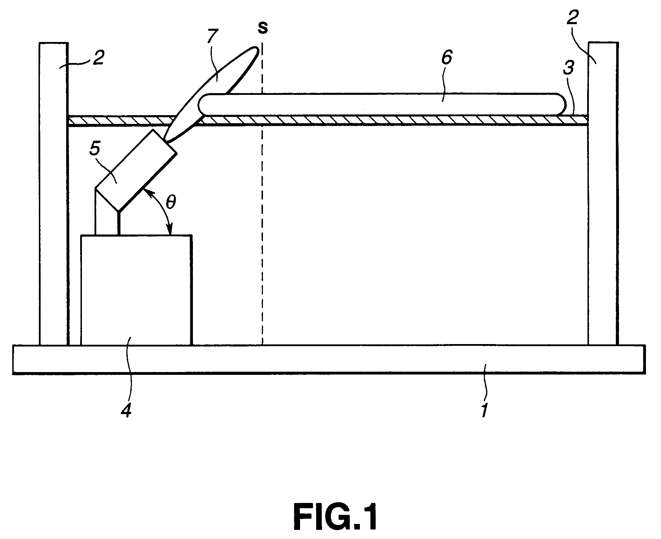

Tests on combustion retardant properties were conducted using a device shown in Fig.1.

This device is made up of a base block 1 on which are secured two pillars 2 across which is placed a metal net 3 (of stainless steel, square net-like structure 5×5 mm in size). Below the metal net 3 is placed a butane gas burner 4. This butane gas burner 4 has a gas blowout opening 5 which is oriented at an angle relative to the horizontal of 45° and which is adjusted in height so that a blue flame produced on inflammation of the gas is extended over the metal net 3 to blow out towards above. A measurement sample 6 is a piece of the gelated electrolyte in the test tube cut to a length of 130 mm and is placed on the metal net 3.

The combustion retardant properties were evaluated by applying the flame 7 from the butane gas burner 4 to a point spaced 6 mm from the end of the measurement sample 6, by keeping the sample in contact with the flame for 30 sec and by observing the degree of combustion in this area after moving the flame away from the sample. The state in which the burned portion of the gelated electrolyte has not reached a marker line S spaced 25 mm away from the end is judged to be 'non-combustible', whereas the state in which the burned portion of the gelated electrolyte has traversed the marker line S is judged to be 'combustible'.

The results of evaluation of the ion conductivity, activation energy and combustion retardant properties at -20°C, measured as described above, are shown in Tables 1 to 9.

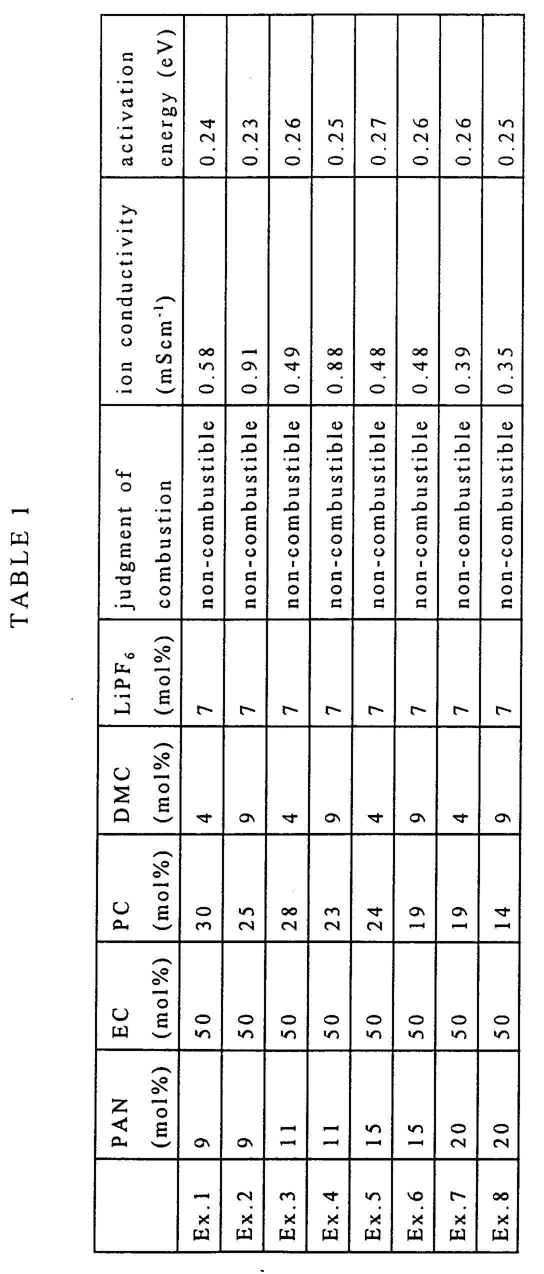

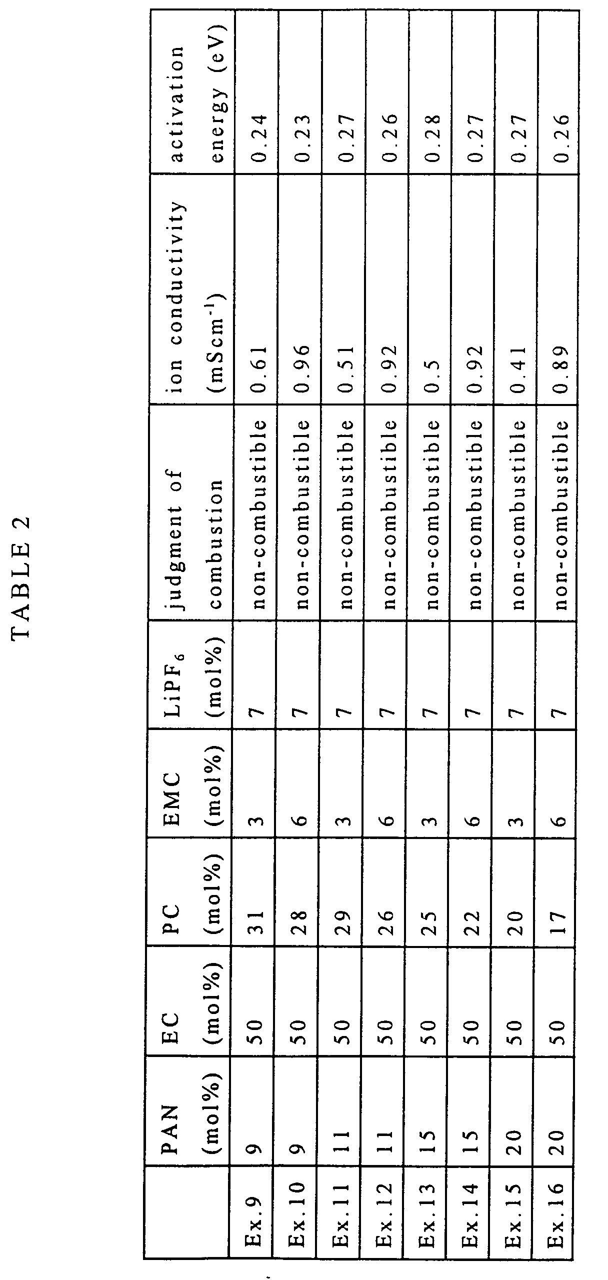

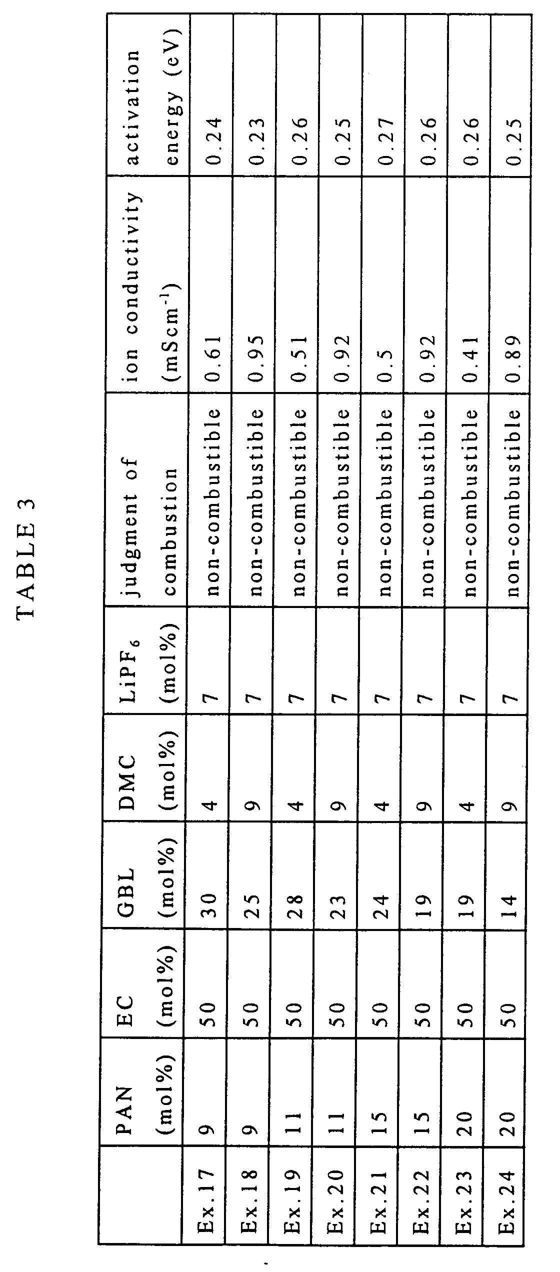

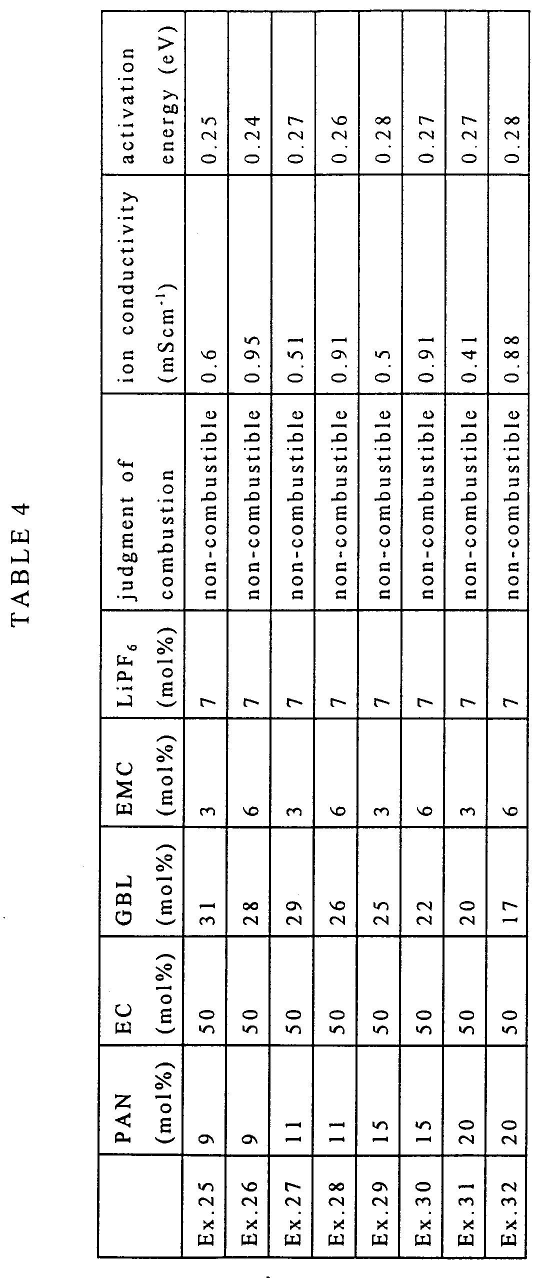

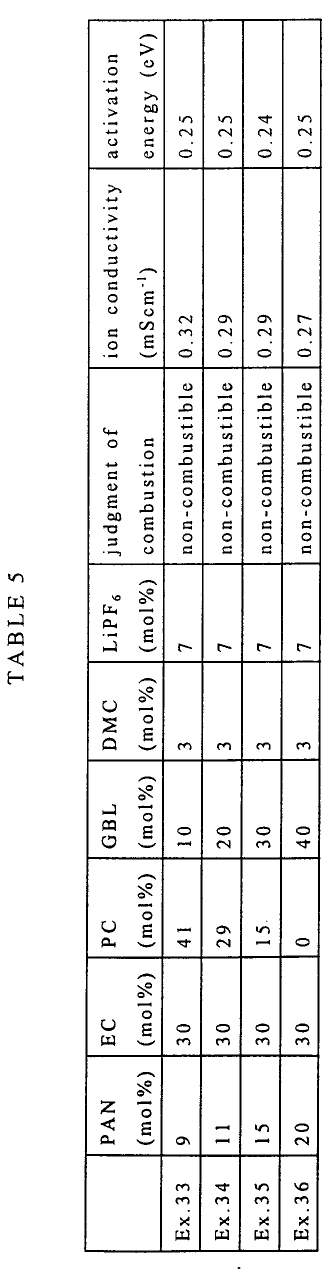

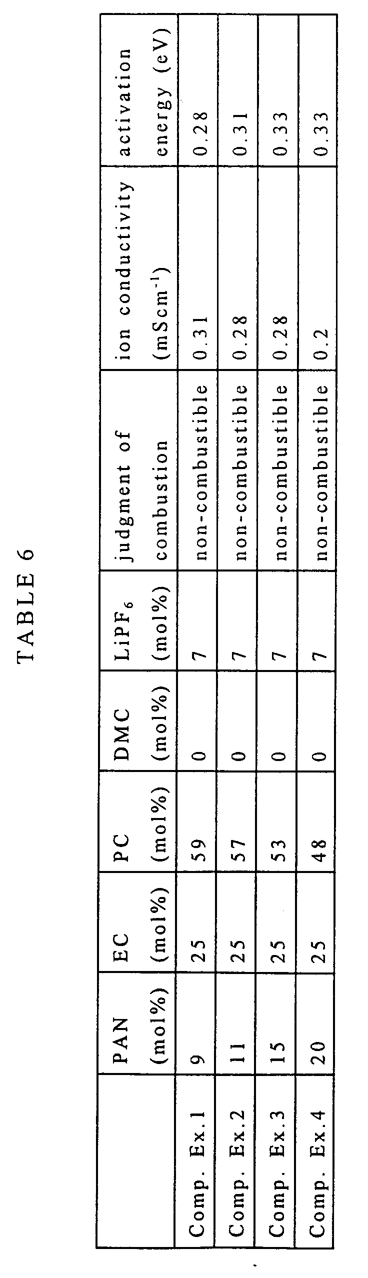

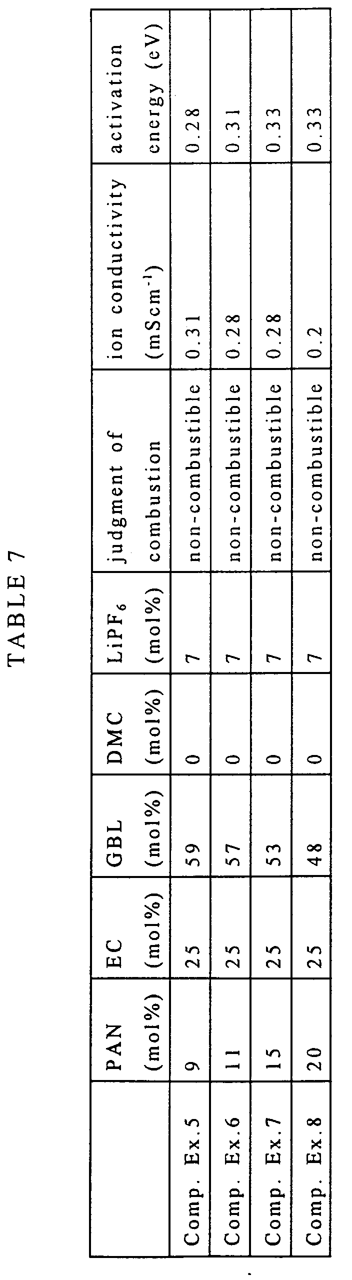

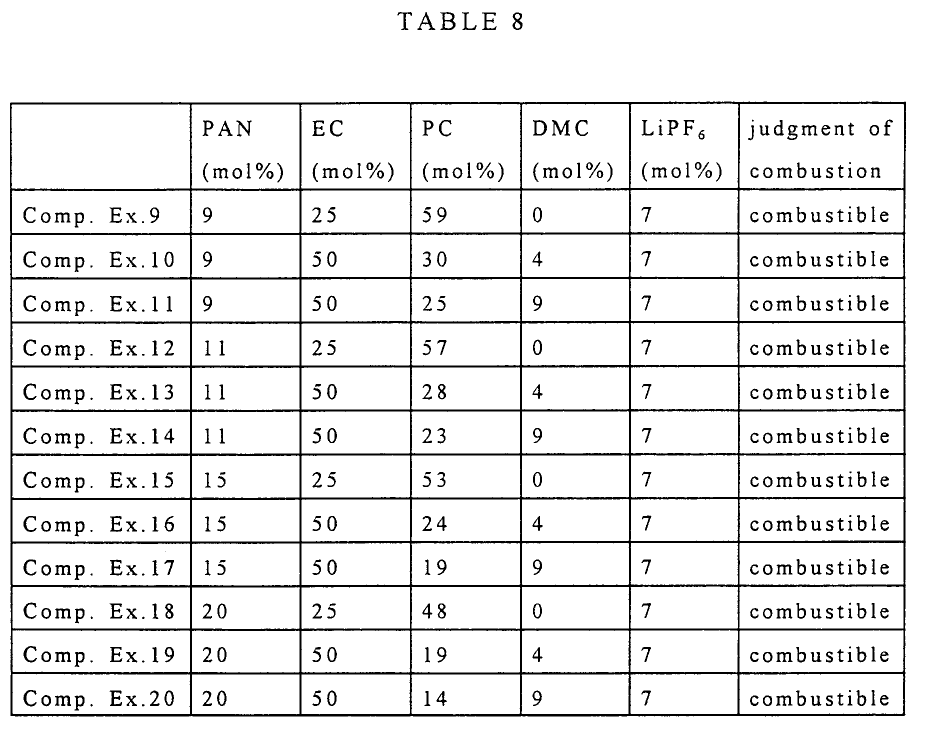

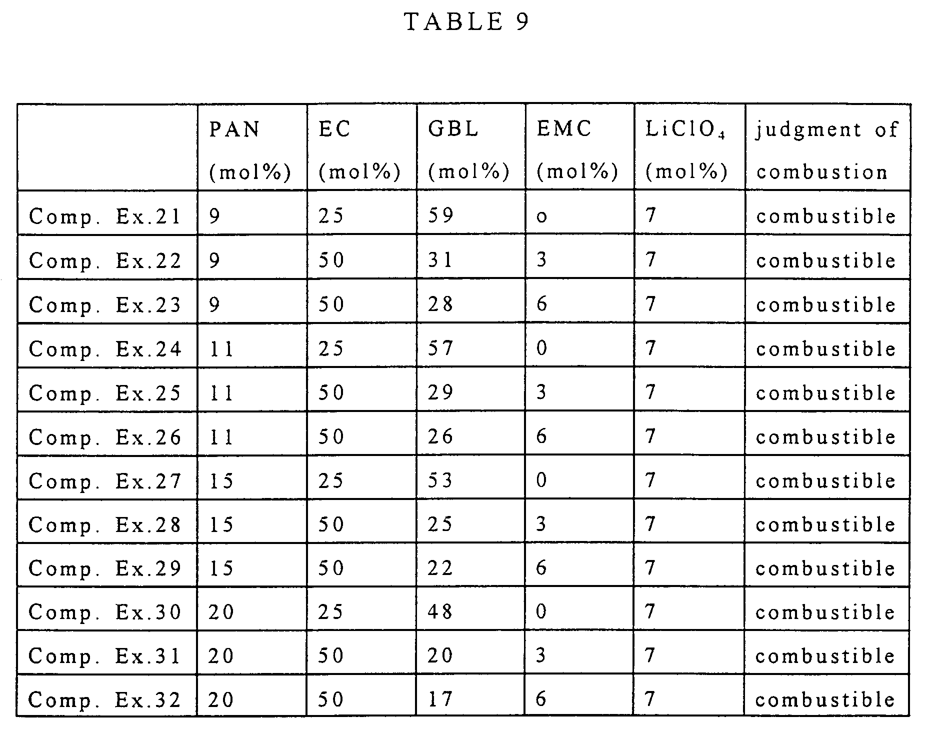

In Tables 1 to 9, EC, PC, GBL, DMC, EMC and PAN denote ethylene carbonate, propylene carbonate, γ-butyrolactone, dimethyl carbonate, ethyl methyl carbonate, and polyacrylonitrile, respectively. The molar fraction of PAN was calculated by the molecular weight of the structure of the recurrent unit.

First, in the gelated electrolytes of the Comparative Examples 9 to 32, employing LiClO₄ as the electrolyte salt, combustibility was noticed in the test on combustion retardant properties.

Conversely, in the gelated electrolytes of the Examples 1 to 36 and comparative Examples 1 to 8, employing LiPF₆ as the electrolyte salt, combustibility was hardly noted so that combustion retardant properties were displayed.

From this it was found that LiPF₆ was desirable as the electrolyte salt used in the gelated electrolyte.

However, of the gelated electrolytes for which combustion retardant properties could be achieved, those of the Comparative Examples 1 to 8 not containing dimethyl carbonate or methyl ethyl carbonate in the non-aqueous liquid electrolyte are lower in ion conductivity than the gelated electrolytes of the Examples 1 to 36 and exhibit large temperature dependency of the activation energy.

From this it was found that, as the non-aqueous solvent used in the gelated electrolyte, mixed solvents obtained on mixing third non-aqueous solvents, such as dimethyl carbonate or ethyl methyl carbonate, in ethylene carbonate and propylene carbonate, as in Examples 1 to 16, mixed solvents obtained on mixing third non-aqueous solvents, such as dimethyl carbonate or ethyl methyl carbonate, in ethylene carbonate and γ-butyrolactone, as in Examples 17 to 32, and mixed solvents obtained on mixing fourth non-aqueous solvents, such as dimethyl carbonate or ethyl carbonate, in ethylene carbonate, propylene carbonate and γ-butyrolactone, are desirable, as in Examples 33 to 36.

If, in Examples 1 to 32, the relation between the ratio of the third or fourth non-aqueous solvent (dimethyl carbonate or methyl ethyl carbonate) and ion conductivity of the test samples having the same ratio of polyacrylonitrile is checked, it is seen that the higher the ratio of these non-aqueous solvents, the higher is ion conductivity and smaller is the temperature dependency.

From this it is suggested that addition of the third or fourth non-aqueous solvent leads to increased ion conductivity of the gelated electrolyte and to lowered temperature dependency.

Next, primary and secondary cells employing the above-described gelated electrolytes were prepared and the characteristics thereof were evaluated.

### Fabrication of Primary Cell

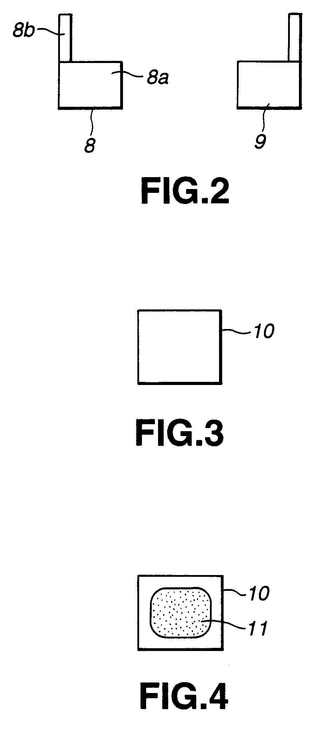

Figs.2 to 6 show the fabrication process for the cell.

A positive electrode plate 8, shown in Fig.2, was prepared as follows:

85 wt% of manganese dioxide, 10 wt% of graphite and 5 wt% of polyvinylidene fluoride were mixed and an approximately equal amount of dimethyl formamide powders were mixed to the resulting mixture and kneaded to prepare a positive electrode mixed material.

This positive electrode mixed material was coated on a 2 cm by 2 cm area on a stainless steel mesh operating as a current collector and the resulting product was dried in a drier maintained at a temperature of 120°C and pressed by a roll.
This electrode plate was molded to such a shape in which a strip-shaped current collector 8b was extended from a coating area 8a of the positive electrode mixed material as shown in Fig.2 in order to prepare a positive electrode plate 8.

A lithium metal plate 30 µm in thickness was cut to a size of 2 cm by 2 cm and press-fitted to a current collector, having the same planar shape as the above-mentioned positive electrode plate, for preparing a negative electrode plate 9.

A gelated electrolyte was applied on both the positive electrode plate 8 and on the negative electrode plate 9.

Then, a non-woven fabric of polypropylene, 150 µm in thickness, operating as a partitioning film 10, as shown in Fig.3, was readied. A gelated electrolyte 11 was also coated on this partitioning film 10, as shown in Fig.4. This gelated electrolyte was of the same composition as that of Example 3. The positive electrode plate 8, partitioning film 10 and the negative electrode plate 9 were stacked together in this order to prepare an electrode device.

The produced electrode device was covered with a bag-shaped heat-fusible laminated film, manufactured by DAI-NIPPON INSATSU-SHA, operating as an exterior material for the cell 12, and an upper heat-fused portion 12a was packed in vacuum to prepare a flat-plate-shaped primary cell. Meanwhile, this heat-fusible laminated film is comprised of three layers, namely a polyethylene terephthalate film, an aluminum foil and a non-stretched polypropylene film, with the polyethylene terephthalate film facing to outside of the cell.

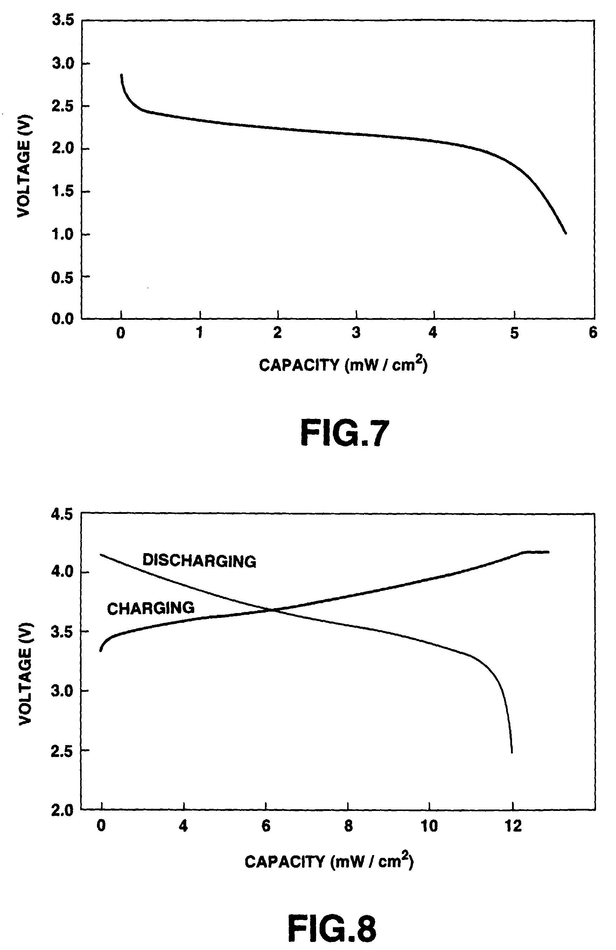

The discharge characteristics of the primary cell, thus prepared, were checked. For discharge, the discharge current density was set to 1 mA/cm², with the end of discharging being at a time point when the closed-circuit voltage reaches 1.0 V. Fig.7 shows the discharge characteristics.

Referring to Fig.7, this primary cell has a mean discharge voltage of 2.6 to 2.8 V, and exhibits a satisfactory smooth discharge curve. From this it is seen that this gelated electrolyte displays sufficient performance as the electrolyte material for the primary cell.

### Fabrication of Secondary Cell

90 wt% of lithium acid nickel, 8 wt% of graphite and 2 wt% of polyvinylidene fluoride were mixed and approximately equal amounts of powdered dimethyl formamide were added to the resulting mixture. The resulting mass was kneaded to produce a positive electrode mixed material.

This positive electrode mixed material was applied to an area 2cm by 2cm on a stainless steel mesh operating as a current collector, and the resulting assembly was dried in a drier maintained at 120°C and pressed by a roll. This electrode plate was molded to a shape in which the strip-shaped current collector was extended outwards from the area coated with the positive electrode mixed material to prepare a positive plate.

Then, 90 wt% of mesophase small-ball-shaped carbon and 10 wt% of polyvinylidene fluoride were mixed and approximately equal amounts of powdered dimethyl formamide was added to the resulting mixture. The resulting mass was kneaded to produce a negative electrode mixed material.

This negative electrode mixed material was applied to an area 2cm by 2cm on a stainless steel mesh operating as a current collector, and the resulting assembly was dried in a drier maintained at 120°C and pressed by a roll. This electrode plate was molded to a shape in which the strip-shaped current collector was extended outwards from the area coated with the positive electrode mixed material to prepare a negative plate.

A flat-plate-shaped secondary cell was fabricated in the same way as shown in Figs.3 to 6 except using the positive and negative electrode plates fabricated as described above.

The charging/discharging characteristics of the secondary cell, thus prepared, were checked.

The charging was carried out by a constant current constant voltage method in which switching to the constant voltage method occurs at 4.2 V. The charging current and the charging time were set to 312 µA/cm² and to 10 hours, respectively. The discharging was carried out continuously by the constant current method at 312 µA/cm² and measurements were made up to a time point when the closed-circuit voltage was equal to 2.5 V.

Fig.8 shows charging/discharging characteristics for the third charging/discharging cycle. It is seen from Fig.8 that the mean voltage of the cell is 3.61 V and the charging/discharging efficiency is 99%, thus demonstrating superior reversibility. From this it is seen that this gelated electrolyte demonstrates a sufficient performance as an electrolyte material of a secondary cell having a high energy density.

### Example 37

A gelated electrolyte was prepared in the following manner:

First, ethylene carbonate (EC) and γ-butyrolactone (GBL) were mixed at a proportion of 60 mol%:20 mol% and further 10 mol% of LiPF₆ was added to the resulting mixture to produce a non-aqueous liquid electrolyte.

This non-aqueous was liquid electrolyte was poured into a beaker and heated to 120°C under agitation in a dry atmosphere with the dew point not higher than -50°C. To this heated solvent was added powdered polyacrylonitrile (PAN; number average molecular weight of 150000; solubility parameter, 12) to a molar fraction of polyacrylonitrile of 10 mol% and agitation under heating was continued for 20 minutes to produce a transparent highly viscous solution. Subsequently, the heating was discontinued and a fraction of the highly viscous solution was quickly spread on a flat Petri dish while another fraction thereof was poured into a glass test tube (12 mm inner diameter by 150 mm in length). Both fractions were allowed to cool overnight to prepare a gelated electrolyte.

### Example 38

A gelated electrolyte was prepared in the same way as in Example 37 except changing the content of ethylene carbonate (EC) and that of γ-butyrolactone (GBL) as shown in Table 10.

### Example 39

A gelated electrolyte was prepared in the same way as in Example 37 except adding propylene carbonate (PC) to an non-aqueous solvent and setting the content of ethylene carbonate (EC), that of γ-butyrolactone (GBL) and that of propylene carbonate (PC) as shown in Table 10.

### Comparative Example 33

A gelated electrolyte was prepared in the same way as in Example 37 except changing the content of ethylene carbonate (EC) and that of γ-butyrolactone (GBL) as shown in Table 10.

### Comparative Example 34

A gelated electrolyte was prepared in the same way as in Example 37 except adding propylene carbonate (PC) in place of γ-butyrolactone to the non-aqueous solvent, changing the content of ethylene carbonate (EC) and that of propylene carbonate (PC) as shown in table 10 and changing the content of LiPF₆ to 8 mol%.

Of the gelated electrolyte, fabricated as described above, ion conductivity, combustion retardant properties and resistance to charge movement were evaluated. The following is the method for measuring these characteristics. Measurement of ion Conductivity

The gelated electrolyte in a flat Petri plate was sliced in a column 1.0 cm across and clinched between two disc-shaped electrodes of platinum 1.0 cm across and ion conductivity of the gelated electrolyte was measured by the complex impedance method using an impedance analyser (trade name: HP4192A). Measurements were conducted at a temperature not higher than 25°C under the following measurement conditions:
Applied voltage: 0.5V
Scanning frequency range: 5 to 13 MHz

### Test on Combustion Retardant Properties

Tests on combustion retardant properties were conducted on a device shown in Fig.1.

This device is made up of a base block 1 on which are secured two pillars 2 across which is placed a metal net 3 (of stainless steel, square net-like structure 5mm by 5 mm in size). Below the metal net 3 is placed a butane gas burner 4. This butane gas burner 4 has a gas blowout opening 5 which is oriented at an angle relative to the horizontal of 45° and which is adjusted in height so that a blue flame produced on inflammation of the gas is extended over the metal net 3 to blow out towards above. A measurement sample 6 is a piece of the gelated electrolyte in the test tube cut to a length of 130 mm and is placed on the metal net 3.

The combustion retardant properties were evaluated by applying the flame 7 from the butane gas burner 4 to a point spaced 6 mm from the end of the measurement sample 6, by keeping the sample in contact with the flame for 30 sec and by observing the degree of combustion in this area after moving the flame away from the sample. The state in which the burned portion of the gelated electrolyte has not reached a marker line S spaced 25 mm away from the end is judged to be 'non-combustible', whereas state in which the burned portion of the gelated electrolyte has traversed the marker line S is judged to be 'combustible'.

### Measurement of resistance to Charge Movement

The gelated electrolyte in a flat Petri plate was sliced in a column 1.0 cm across and clinched between two disc-shaped electrodes of platinum 1.0 cm across and time changes in the resistance to charge movement of the gelated electrolyte were measured by the complex impedance method using an impedance analyser (trade name: HP4192A). Measurements were conducted at a temperature not higher than 25°C under the following measurement conditions:
applied voltage: 0.01 V
scanning frequency range: 10 mHz to 1 kHz.

It is felt that increase in resistance to charge movement with lapse of time is ascribable to transmutation of the gelated electrolyte on contact with metal lithium as an electrode material and to resultant accumulation on the metal surface of an inactivated film. Therefore, the resistance to charge movement may be deemed as being an index of chemical stability of the gelated electrolyte with respect to metal lithium.

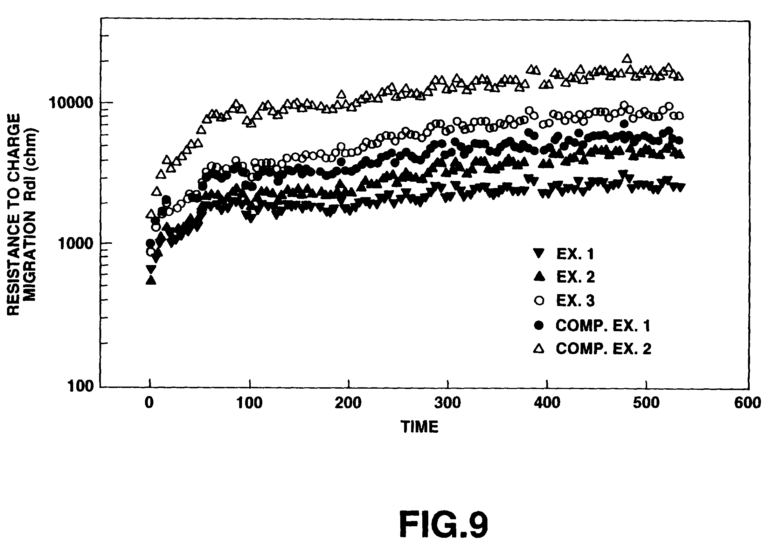

The measured results of the ion conductivity and the results of evaluation of combustion retardant properties are shown in Table 10. The time changes of the resistance to charge movement are shown in Fig.9.

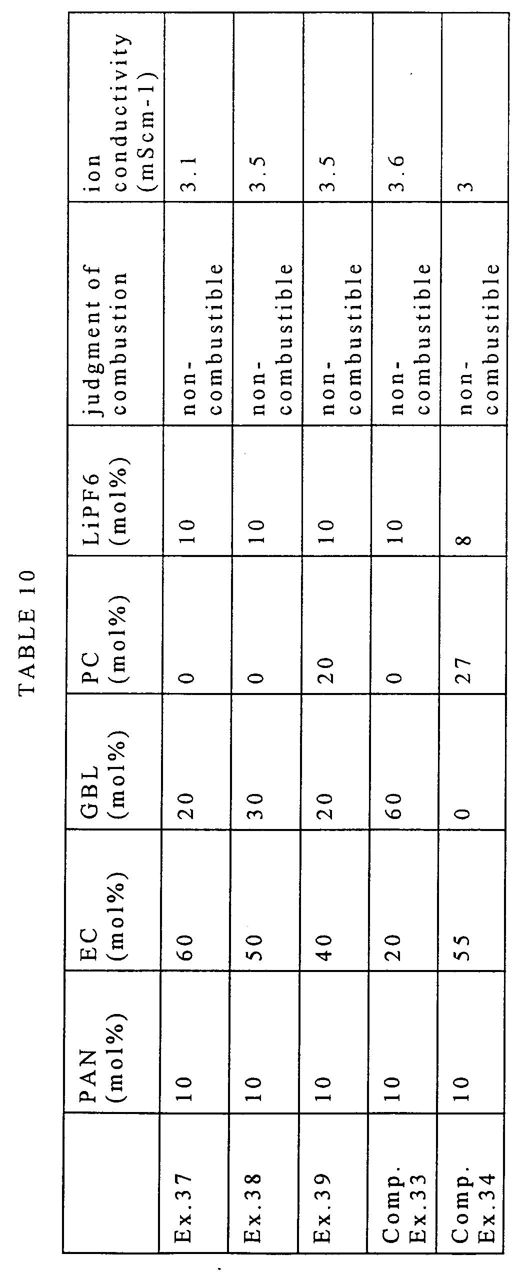

It is noted that the molar fraction of polyacrylonitrile (PAN) has been calculated based on the molecular weight of the structure of the recurrent units.

First, as shown in Table 10, the gelated electrolytes of Examples 37 to 39 and comparative Example 33 containing γ-butyrolactone exhibits higher ion conductivity than with the gelated electrolyte of Comparative Example 34 not containing γ-butyrolactone.

From this it may be seen that content of γ-butyrolactone in a solvent raises ion conductivity of the gelated electrolyte.

Next, comparison of time changes of the charge movement resistance of Fig.9 of the gelated electrolytes of Examples 37 and 38 and Comparative Example 33 reveals that the gelated electrolyte of Comparative Example 33 with the content of γ-butyrolactone is acutely increased in charge movement resistance in a shorter time less than 100 hours, whereas the gelated electrolytes of Examples 37 and 38 with the content of γ-butyrolactone less than 30 mol% is not increased in charge movement resistance.

It is seen from this that, for suppressing the resistance to charge movement of the gelated electrolyte, it is necessary to suppress γ-butyrolactone content to not larger than 30 mol%.

The gelated electrolyte of Example 39 or Comparative Example 34 containing propylene carbonate tends to demonstrate the resistance to charge movement higher than that of the gelated electrolyte not containing propylene carbonate. Therefore, in order to suppress increase in resistance against charge movement, the amount of propylene carbonate is desirably suppressed to a minimum.

Then, primary and secondary cells were fabricated, using the above-described gelated electrolyte built therein, and evaluation was made of the characteristics thereof.

### Fabrication of Primary Cells

Figs.2 to 6 illustrate the fabrication process for the cell.

First, a positive electrode plate 8 shown in Fig.2 was fabricated.

85 wt% of manganese dioxide, 10 wt% of graphite and 5 wt% of polyvinylidene fluoride were mixed together and approximately equal amounts of powdered dimethyl formamide were added to the resulting mixture and the resulting mass was kneaded to produce a positive electrode mixed material.

This positive electrode mixed material was applied to an area 2 cm by 2 cm on a stainless steel mesh operating as a current collector, and the resulting assembly was dried in a drier maintained at 120°C and pressed by a roll. This electrode plate was molded to a shape in which the strip-shaped current collector 8b is extended outwards from an area 8a coated with the positive electrode mixed material to prepare a positive plate 8.

Then, a plate of metal lithium 30 µm in thickness, was cut to a size of 2 cm by 2 cm and press-fitted to a current collector of substantially the same configuration as the above-described positive electrode plate to produce a negative electrode plate 9.

A gelated electrolyte was then coated on the positive electrode plate 8 and the negative electrode plate 9.

Then, a non-woven cloth of polypropylene, 150 µm in thickness, serving as a partitioning film 10 shown in Fig.3, was readied. A gelated electrolyte 11 was coated on this partitioning film 10, as shown in Fig.4.

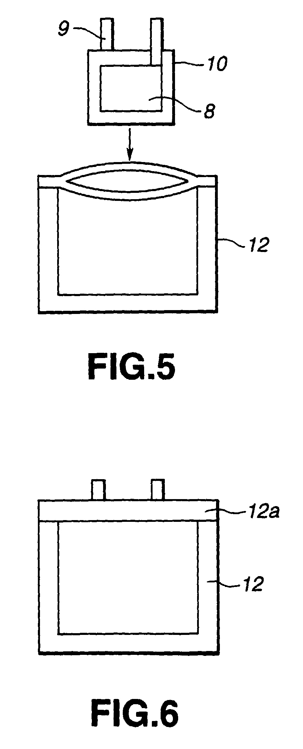

The positive electrode plate 8, partitioning film 10 and the negative electrode plate 9 were stacked in this order and pressed together as shown in Fig.5 to produce an electrode element.

The produced electrode device was covered with a bag-shaped heat-fusible laminated film, manufactured by DAI-NIPPON INSATSU-SHA, operating as an exterior material for the cell 12, and an upper heat-fused portion 12a was packed in vacuum to prepare a flat-plate-shaped primary cell, as shown in Fig.6. Meanwhile, this heat-fusible laminated film is comprised of three layers, namely a polyethylene terephthalate film, an aluminum foil and a non-stretched polypropylene film, with the polyethylene terephthalate film facing to outside of the cell.

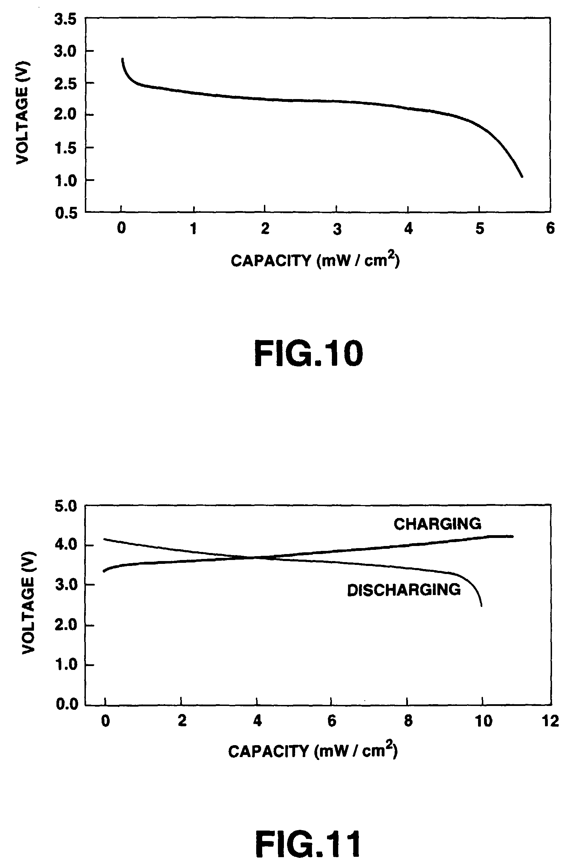

The discharge characteristics of the primary cell, thus prepared, were checked. For discharge, the discharge current density was set to 500 µA/cm², with the end of discharging being at a time point when the closed-circuit voltage reaches 1.0 V. Fig.10 shows the discharge characteristics.

Referring to Fig.10, this primary cell has a mean discharge voltage of 2.6 to 2.8 V, and exhibits a satisfactory smooth discharge curve. From this it is seen that this gelated electrolyte displays sufficient performance as the electrolyte material for the primary cell.

### Fabrication of Secondary Cells

90 wt% of nickel acid lithium, 8 wt% of graphite and 2 wt% of polyvinylidene fluoride were mixed together and approximately equal amounts of powdered dimethyl formamide were added to the resulting mixture and the resulting mass was kneaded to produce a positive electrode mixed material.

This positive electrode mixed material was applied to an area 2 cm by 2 cm on a stainless steel mesh operating as a current collector, and the resulting assembly was dried in a drier maintained at 120°C and pressed by a roll. This electrode plate was molded to a shape in which the strip-shaped current collector was extended outwards from an area coated with the positive electrode mixed material to prepare a positive plate.

Then, 90 wt% of mesophase small-ball-shaped carbon and 10 wt% of polyvinylidene fluoride were mixed and approximately equal amounts of powdered dimethyl formamide was added to the resulting mixture. The resulting mass was kneaded to produce a negative electrode mixed material.

This negative electrode mixed material was coated on an area of 2 cm by 2 cm size on a stainless steel mesh operating as a current collector and dried in a drier maintained at a temperature of 120°C. The resulting mass was pressed by a roll to prepare a negative plate which was molded to a shape in which a strip-shaped current collector was extended from the coating area of the negative electrode mixed material to produce a negative electrode plate.

A flat-plate-shaped secondary cell was prepared by the same method as that shown in Figs.2 to 6 except using the positive and negative electrode plates fabricated as described above.

The charging/discharging characteristics of the secondary cell, thus produced, were checked.

The charging was carried out by a constant current constant voltage method in which switching to the constant voltage method occurs at 4.2 V. The charging current and the charging time were set to 512 µA/cm² and to 10 hours, respectively. The discharging was carried out continuously by the constant current method at 512 µA/cm² and measurements were made up to a time point when the closed-circuit voltage was equal to 2.5 V.

Fig.11 shows charging/discharging characteristics for the third charging/discharging cycle. It is seen from Fig.11 that the mean voltage of the cell is 3.61 V and the charging/discharging efficiency is 99%, thus demonstrating superior reversibility. From this it is seen that this gelated electrolyte demonstrates a sufficient performance as an electrolyte material of a secondary cell having a high energy density.

## Claims

1. A cell comprising:
a positive electrode;
a negative electrode;
a gelated electrolyte composed of a high molecular material containing polyacrylonitrile and having solubility parameter of 8 to 15 (cal/cm²)^{½}, a mixed solvent and an electrolyte salt mainly composed of LiPF₆, said mixed solvent being a mixture of ethylene carbonate, propylene carbonate and a third non-aqueous solvent which is at least one selected from the group consisting of dimethyl carbonate, ethyl methyl carbonate, methyl propionate and ethyl propionate.

2. The cell as recited in claim 1 containing a mixture of at least one selected from the group consisting of LiN(CF₃SO₂)₂, Li(CF₂SO₂)₃, LiBF₄, LiAsF₆, LiCF₃SO₃, LiClO₄ and NaClO₄ with LiPF₆.

3. The cell as recited in claim 1 wherein the high molecular material of the gelated electrolyte is 5000 to 500000.

4. The cell as recited in claim 1 wherein the negative electrode contains one of metal lithium, a lithium alloy and a material capable of occluding and yielding lithium.

5. The cell as recited in claim 4 wherein the material capable of occluding and yielding lithium is a carbonaceous material.

6. The cell as recited in claim 1 wherein the positive electrode contains a lithium transition metal compound oxide represented by the general formula LiₓMO₂, where M is one or more transition metal and where 0.05 ≤ x ≤ 1.10.

7. A cell comprising:
a positive electrode;
a negative electrode;
a gelated electrolyte composed of a high molecular material containing polyacrylonitrile and having solubility parameter of 8 to 15 (cal/cm²)^{½}, a mixed solvent and an electrolyte salt mainly composed of LiPF₆, said mixed solvent being a mixture of ethylene carbonate, γ-butyrolactone and a third non-aqueous solvent which is at least one selected from the group consisting of dimethyl carbonate, ethyl methyl carbonate, methyl propionate and ethyl propionate.

8. The cell as recited in claim 7 containing a mixture of at least one selected from the group consisting of LiN(CF₃SO₂)₂, Li(CF₂SO₂)₃, LiBF₄, LiAsF₆, LiCF₃SO₃, LiClO₄ and NaClO₄ with LiPF₆.

9. The cell as recited in claim 7 wherein the high molecular material of the gelated electrolyte is 5000 to 500000.

10. The cell as recited in claim 7 wherein the negative electrode contains one of metal lithium, a lithium alloy and a material capable of occluding and yielding lithium.

11. The cell as recited in claim 10 wherein the material capable of occluding and yielding lithium is a carbonaceous material.

12. The cell as recited in claim 7 wherein the positive electrode contains a lithium transition metal compound oxide represented by the general formula LiₓMO₂, where M is one or more transition metal and where 0.05 ≤ x ≤ 1.10.

13. A cell comprising:
a positive electrode;
a negative electrode;
a gelated electrolyte composed of a high molecular material containing polyacrylonitrile and having solubility parameter of 8 to 15 (cal/cm²)^{½}, a mixed solvent and an electrolyte salt mainly composed of LiPF₆, said mixed solvent being a mixture of ethylene carbonate, propylene carbonate, γ-butyrolactone and a fourth non-aqueous solvent which is at least one selected from the group consisting of dimethyl carbonate, ethyl methyl carbonate, methyl propionate and ethyl propionate.

14. The cell as recited in claim 13 containing a mixture of at least one selected from the group consisting of LiN(CF₃SO₂)₂, Li(CF₂SO₂)₃, LiBF₄, LiAsF₆, LiCF₃SO₃, LiClO₄ and NaClO₄ with LiPF₆.

15. The cell as recited in claim 13 wherein the high molecular material of the gelated electrolyte is 5000 to 500000.

16. The cell as recited in claim 13 wherein the negative electrode contains one of metal lithium, a lithium alloy and a material capable of occluding and yielding lithium.

17. The cell as recited in claim 16 wherein the material capable of occluding and yielding lithium is a carbonaceous material.

18. The cell as recited in claim 13 wherein the positive electrode contains a lithium transition metal compound oxide represented by the general formula LiₓMO₂, where M is one or more transition metal and where 0.05 ≤ x ≤ 1.10.

19. A cell comprising:
a positive electrode;
a negative electrode; and
a gelated electrolyte composed of a high molecular material containing polyacrylonitrile, a non-aqueous solvent containing γ-butyrolactone and an electrolyte salt mainly composed of LiPF₆, the content of γ-butyrolactone in said gelated electrolyte being 30 mol% or less.

20. The cell as recited in claim 19 wherein the non-aqueous solvent is a mixed solvent of γ-butyrolactone and ethylene carbonate.

21. The cell as recited in claim 19 wherein the non-aqueous solvent is a mixed solvent of γ-butyrolactone, ethylene carbonate and propylene carbonate.

22. The cell as recited in claim 19 wherein the negative electrode contains one of metal lithium, a lithium alloy and a material capable of occluding and yielding lithium.

23. The cell as recited in claim 22 wherein the material capable of occluding and yielding lithium is a carbonaceous material.

24. The cell as recited in claim 19 wherein the positive electrode contains a lithium transition metal compound oxide represented by the general formula LiₓMO₂, where M is one or more transition metal and where 0.05 ≤ x ≤ 1.10.
